# EUROPEAN PATENT APPLICATION

(11) **EP 3 046 201 A1**
(43) Date of publication of application: **20.07.2016**
(21) Application number: 13893445.0
(22) Date of filing: 16.12.2013
(51) Int. Cl.: H02J 3/38

(54) **DRIVING SYSTEM FOR MULTI-ENERGY POWER SUPPLY MOTOR**

(30) Priority: 10.09.2013 CN 201310409264
(71) Applicant: CSR Zhuzhou Electric Locomotive Research Institute, Zhuzhou Hunan 412001 (CN)
(72) Inventor: LI, Jianquan, Zhuzhou Hunan 412001 (CN); JIAN, Fang, Zhuzhou Hunan 412001 (CN); WU, Xiaoyun, Zhuzhou Hunan 412001 (CN); LI, Yun, Zhuzhou Hunan 412001 (CN); ZHAI, Wenjie, Zhuzhou Hunan 412001 (CN); GUAN, Rende, Zhuzhou Hunan 412001 (CN); CUI, Jian, Zhuzhou Hunan 412001 (CN); CHENG, Yuxu, Zhuzhou Hunan 412001 (CN); CHEN, Yifeng, Zhuzhou Hunan 412001 (CN); TANG, Haiyan, Zhuzhou Hunan 412001 (CN)
(74) Representative: Epping - Hermann - Fischer
(86) International application number: PCT/CN2013/089542
(87) International publication number: WO 2015/035727

(57) **Abstract**

A driving system for a multi-energy power supply motor comprises a distributed power supply (10), a frequency converter (20), a public power grid (30), and a motor load (40). The distributed power supply is connected to a direct-current bus (203) of the frequency converter, and is used for acquiring and transmitting a direct current to the frequency converter. The frequency converter comprises a first bidirectional current transformer (201), an inverter (202), and a direct-current bus. The first bidirectional current transformer is connected to the inverter through the direct-current bus. The first bidirectional current transformer is connected to the public power grid. The inverter is connected to the motor load. The distributed power supply, the public power grid and the motor load are separately connected to the frequency converter, so that the motor load can also receive power supplied by the distributed power supply through the frequency converter even though a public power grid cannot be used.

## Description

### CROSS REFERENCE OF RELATED APPLICATION

This application claims priority to Chinese Patent Application No. 201310409264.8, titled "DISTRIBUTED POWER SUPPLY SYSTEM" and filed on September 10, 2013 with the State Intellectual Property Office of the PRC, which is incorporated herein by reference in its entirety.

### FIELD

The disclosure relates to the technical field of power supply, and particularly to a motor drive system with multi-energy power supply.

### BACKGROUND

In recent years, under the pressure of both energy crisis and environmental pollution, more attention has been paid to the development of new energy resources such as solar energy, wind energy and tidal energy all over the world. The power generated by a distributed power supply such as solar photovoltaic, wind power or fuel cells is typically transmitted to a public power grid through a frequency converter, and supplies the power to a motor load connected to the public power grid through the public power grid. However, if there is a power blackout of the public power grid, even though the distributed power supply is still in normal operation, the generated power cannot be transmitted to the motor load through the public power gird. Thus in regions where such emerging distributed power supply is applied, the distributed power supply is unavailable even it is in normal operation when a power blackout of the public power grid occurs.

### SUMMARY

In view of this, a motor drive system with multi-energy power supply is provided, which allows a distributed power supply not to depend on a public power grid.

The following technical solutions are described according to the embodiments of the disclosure.

A motor drive system with multi-energy power supply is provided. The system includes a distributed power supply, a frequency converter, a public power grid and a motor load.

The distributed power supply is connected to a direct-current bus of the frequency converter, and is configured to collect a direct current and transmit the direct current to the frequency converter.

The frequency converter includes a first bi-directional current converter, an inverter and the direct-current bus, and the first bi-directional current converter is connected to the inverter through the direct-current bus.

The first bi-directional current converter is connected to the public power grid, and is configured to convert an alternating current received from the public power grid to a direct current, output the direct current to the direct-current bus, convert a direct current transmitted from the direct-current bus to an alternating current and output the alternating current to the public power grid.

The inverter is connected to the motor load, and is configured to convert the direct current transmitted from the direct-current bus to an alternating current and output the alternating current to the motor load.

The public power grid is configured to transmit an alternating current.

The motor load is configured to operate based on a received alternating current transmitted from the inverter.

Preferably, the system further includes a power storage unit.

The power storage unit includes a storage element and a connection switch, where the storage element is connected to the direct-current bus of the frequency converter through the connection switch, and is configured to store a direct current of the direct-current bus.

Preferably, the power storage unit further includes a second bi-directional current converter.

The second bi-directional current converter is connected between the storage element and the connection switch, and is configured to convert a direct current received from the direct-current bus to a direct current meeting a specification of the storage element, and convert a direct current received from the storage element to a direct current meeting a specification of the direct-current bus.

Preferably, the system further includes:
a grid-connection switch, where the public power grid is connected to the first bi-directional current converter through the grid-connection switch.

Preferably, the distributed power supply includes any combination of one or more of solar photovoltaic, a fuel cell and wind power.

Preferably, in a case that the distributed power supply includes the solar photovoltaic, the system further includes a first current converter.

The distributed power supply is connected to the direct-current bus through the first current converter, and the first current converter is configured to convert a direct current outputted from the solar photovoltaic to a direct current meeting a specification of the direct-current bus.

Preferably, in a case that the distributed power supply includes the fuel cell, the system further includes a second current converter.

The distributed power supply is connected to the direct-current bus through the second current converter, and the second current converter is configured to convert a direct current outputted from the fuel cell to a direct current meeting a specification of the direct-current bus.

Preferably, in a case that the distributed power supply includes the wind power, the system further includes a third current converter; and

The distributed power supply is connected to the direct-current bus through the third current converter, and the third current converter is configured to convert an alternating current outputted from the wind power to a direct current meeting a specification of the direct-current bus.

Preferably, the distributed power supply is connected to the direct-current bus through a connection switch.

As can be seen from the technical solutions, the distributed power supply, the public power grid and the motor load are connected to the frequency converter respectively, so that the motor load may operate normally with power received from the distributed power supply through the frequency converter even if the public power grid is unavailable.

### BRIEF DESCRIPTION OF THE DRAWINGS

The drawings to be used in the description of embodiments or the conventional technology are described briefly as follows, so that technical solutions according to the embodiments of the present disclosure or the conventional technology may become clearer. Apparently, the drawings in the following description are only some embodiments of the present disclosure. For those skilled in the art, other drawings may be obtained based on these drawings without any creative work.
Figure 1 is a diagram of a systematic structure of a motor drive system with multi-energy power supply of the disclosure;
Figure 2 is a diagram of another systematic structure of the motor drive system with multi-energy power supply of the disclosure;
Figure 3 is a diagram of another systematic structure of the motor drive system with multi-energy power supply of the disclosure;
Figure 4 is a diagram of another systematic structure of the motor drive system with multi-energy power supply of the disclosure;
Figure 5 is a diagram of another systematic structure of the motor drive system with multi-energy power supply of the disclosure;
Figure 6 is a diagram of another systematic structure of the motor drive system with multi-energy power supply of the disclosure; and
Figure 7 is a diagram of another systematic structure of the motor drive system with multi-energy power supply of the disclosure.

### DETAILED DESCRIPTION OF THE EMBODIMENTS

A motor drive system with multi-energy power supply is provided according to the embodiments of the disclosure. In one aspect, a distributed power supply, a public power grid and a motor load are connected to a frequency converter respectively, so that the motor load may operate normally with power received from the distributed power supply through the frequency converter even if the public power grid is unavailable.

In another aspect, a power storage unit is connected to a direct-current bus of the frequency converter, and supplies power to the motor load through the frequency converter in a condition that both of the public power grid and the distributed power supply are unavailable. Thus adaptability of the system is further enhanced.

To make the objectives, features and advantages of the disclosure more obvious, the embodiments of the disclosure is described in detail in conjunction with the drawings hereinafter.

### A first embodiment

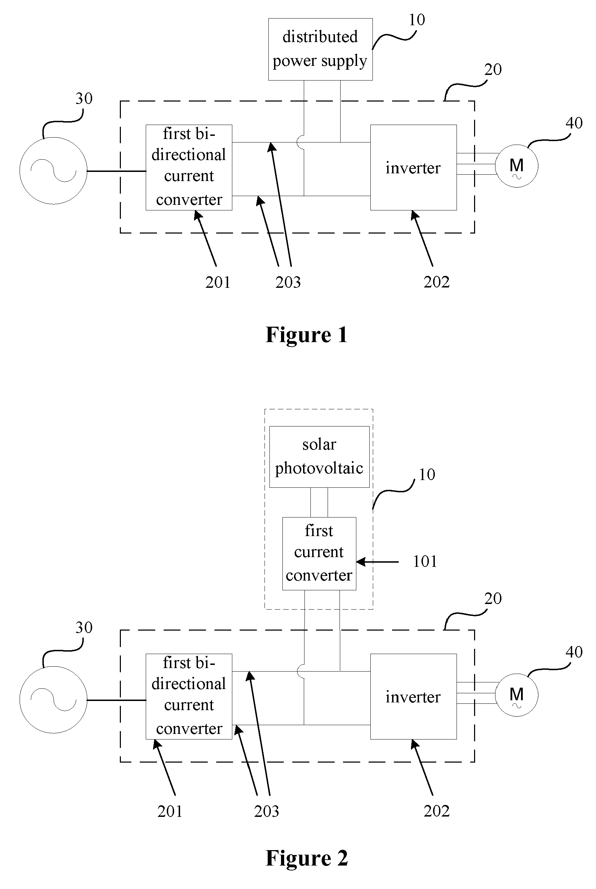

Referring to Figure 1, a diagram of a systematic structure of a motor drive system with multi-energy power supply of the disclosure is shown. The system includes a distributed power supply 10, a frequency converter 20, a public power grid 30 and a motor load 40.

The distributed power supply 10 is connected to a direct-current bus 203 of the frequency converter 20, and is configured to collect a direct current and transmit the direct current to the frequency converter 20.

A frequency converter is a power electronics conversion device which converts a direct current or an alternating current of a public power grid CVCF to a VVVF alternating current. In the field of frequency conversion and speed control of an industrial motor, the frequency converter controls a motor mainly through adjusting a voltage and a frequency, which may prevent the motor from being burned, reduce operational energy consumption of the motor, and save energy.

The distributed power supply described herein mainly refers to a power supply based on emerging energy such as solar energy, wind energy or tidal energy. In the technical solution of the disclosure, preferably, the distributed power supply includes any combination of one or more of solar photovoltaic, a fuel cell and wind power. In other words, multiple distributed power supplies of different types may be connected to a same frequency converter in the disclosure. Connections between the distributed power supplies of three different types and the frequency converter are described in detail hereinafter in conjunction with drawings.

Preferably, in a case that the distributed power supply includes the solar photovoltaic, the system shown in Figure 1 further includes a first current converter 101, as shown in Figure 2.

The distributed power supply is connected to the direct-current bus through the first current converter, and the first current converter is configured to convert a direct current outputted from the solar photovoltaic to a direct current meeting a specification of the direct-current bus.

The first current converter is typically a DC/DC current converter which mainly stabilizes the current and performs maximum power point tracking (MPPT) for a photovoltaic cell array of the solar photovoltaic. If the first current converter is not provided, maximum power point tracking may be performed through a first bi-directional current converter alternatively.

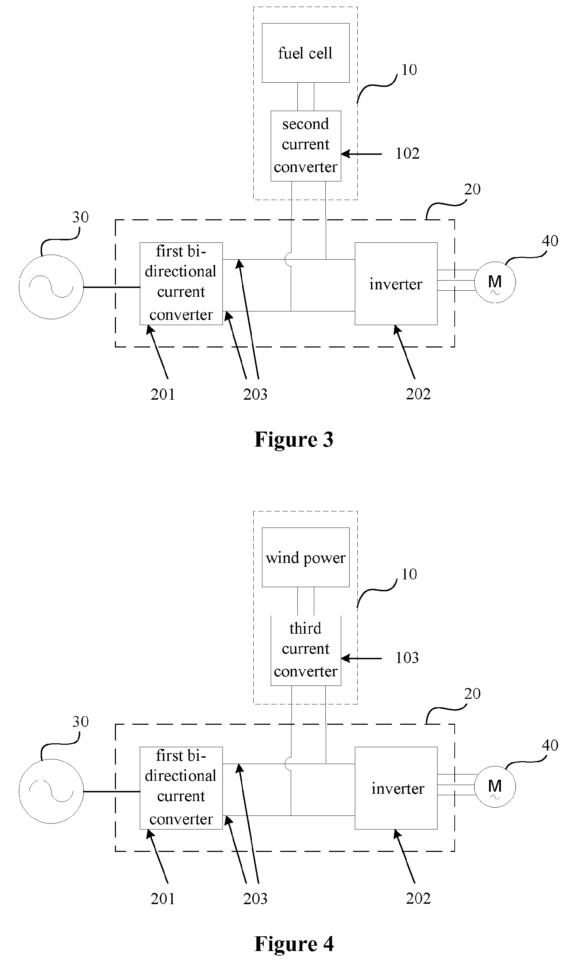

Preferably, in a case that the distributed power supply includes the fuel cell, the system shown in Figure 1 further includes a second current converter 102, as shown in Figure 3.

The distributed power supply is connected to the direct-current bus through the second current converter, and the second current converter is configured to convert a direct current outputted from the fuel cell to a direct current meeting a specification of the direct-current bus.

The second current converter is typically a DC/DC current converter which mainly stabilizes the current.

Preferably, in a case that the distributed power supply includes the wind energy, the system shown in Figure 1 further includes a third current converter 103, as shown in Figure 4.

The distributed power supply is connected to the direct-current bus through the third current converter, and the third current converter is configured to convert an alternating current outputted from the wind energy to direct current meeting a specification of the direct-current bus.

Since the power outputted from the wind energy is typically an alternating current, which can not be inputted into the direct-current bus of the frequency converter, the third current converter is provided as an AC/DC current converter which converts an alternating current outputted from the wind energy to a direct current available for the frequency converter.

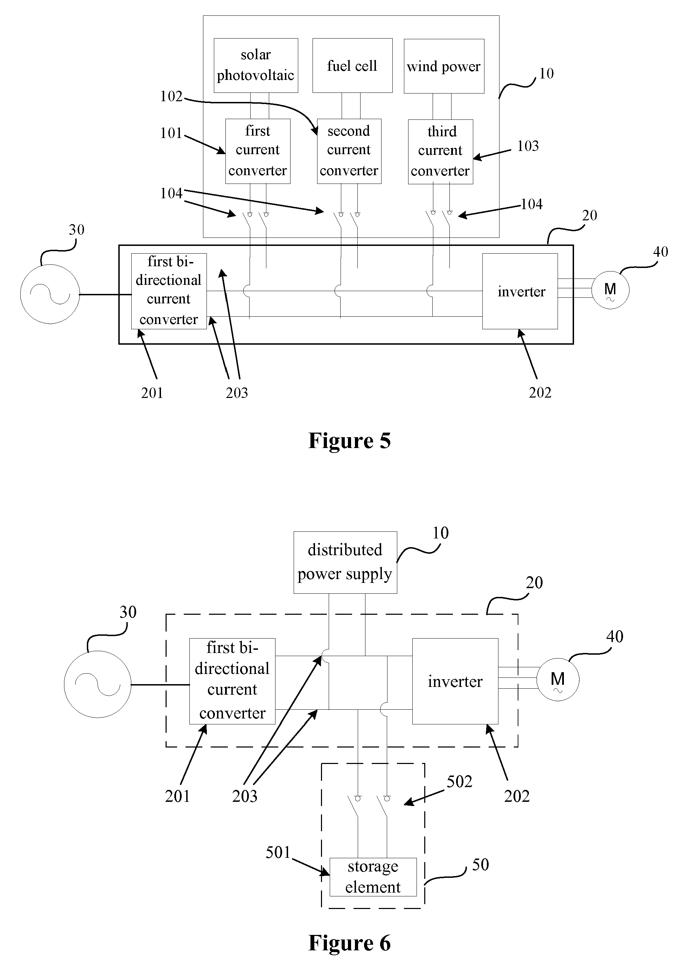

If a connection switch is introduced between the distributed power supply and the direct-current bus, and when the distributed power supply fails or needs to be repaired, a corresponding connection switch may be disconnected directly. Thus the distributed power supply which fails or needs to be repaired may be maintained effectively without affecting normal operation of the entire distributed power supply system, and the motor load connected to the frequency converter may be powered through other distributed power supplies or through the public power grid directly. As shown in Figure 5, three possible types of the distributed power supply are connected to the direct-current bus of the frequency converter through a connection switch 104 respectively. In other words, preferably, the distributed power supply is connected to the direct-current bus through the connection switch.

The frequency converter 20 includes a first bi-directional current converter 201, an inverter 202 and a direct-current bus 203, where the first bi-directional current converter 201 is connected to the inverter 202 through the direct-current bus 203.

It should be noted that, the first bi-directional current converter of the frequency converter is preferably a four-quadrant bi-directional AC/DC current converter with a function of rectification/invertion to grid, in order to realize a grid-connection function of the distributed power supply. In a case that the distributed power supply has a surplus of power or the motor load connected to the frequency converter is not in operation, the surplus of power is fed back into the public power grid through a commercial power complementary system; in a case that the distributed power supply has insufficient power, the motor load connected to the frequency converter may be powered by the public power grid through the frequency converter directly by means of the commercial power complementary system; and in a case that the commercial power and the distributed power supply are insufficient, the motor load connected to the frequency converter may be powered through a power storage system.

The first bi-directional current converter 201 is connected to the public power grid 30, and is configured to convert an alternating current received from the public power grid 30 to a direct current, output the direct current to the direct-current bus, convert a direct current transmitted from the direct-current bus 203 to an alternating current and output the alternating current to the public power grid 30.

Preferably, the system further includes:
a grid-connection switch, through which the public power grid 30 is connected to the first bi-directional current converter 201.

The grid-connection switch provided herein may be disconnected in a case that the frequency divider fails or needs to be repaired, and the frequency converter may be maintained safely and effectively. Further, even if the frequency converter does not fail, the motor load connected to the frequency converter may be powered without connection to the public power grid.

The inverter 202 is connected to the motor load 40, and is configured to convert a direct current transmitted from the direct-current bus 203 to an alternating current and output the alternating current to the motor load 40.

It should be noted that, the inverter 202 is preferably a DC/AC inverter, which converts a direct current of the frequency converter to an alternating current and output the alternating current to the motor load.

The public power grid 30 is configured to transmit an alternating current.

The motor load 40 is configured to operate based on a received alternating current transmitted from the inverter 202.

The motor load mainly refers to various electrical devices.

As can be seen from the embodiment, the distributed power supply, the public power grid and the motor load are connected to the frequency converter respectively, so that the motor load may operate normally with power received from the distributed power supply through the frequency converter, even if the public power grid is unavailable.

### A second embodiment

On the basis of the first embodiment, a power storage unit connected to a frequency converter and effects of the technical solution will be further described. Referring to Figure 6, a diagram of another systematic structure of the motor drive system with multi-energy power supply of the disclosure is shown. The system includes a power storage unit 60.

The power storage unit 50 includes a storage element 501 and a connection switch 502, where the storage element 501 is connected to a direct-current bus 203 of the frequency converter 20 through the connection switch 502, and is configured to store a direct current of the direct-current bus 203.

The storage element 501 may be an accumulator, a super-capacitor or a hybrid power storage system composed of the accumulator and super-capacitor. Further, in a case that the storage element 501 fails or needs to be repaired, the connection switch 502 may be disconnected to remove the storage element from the system without affecting normal operation of the distributed power supply system.

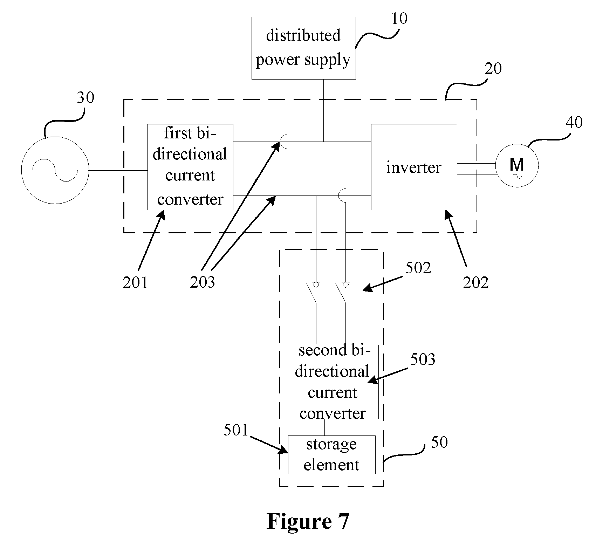

Preferably, the system shown in Figure 6 further includes a second bi-directional current converter 503 in the power storage unit 50, as shown in Figure 7.

The second bi-directional current converter 503 is connected between the storage element 501 and the connection switch 502, and is configured to convert a direct current received from the direct-current bus 203 to a direct current meeting a specification of the storage element 601, and convert a direct current received from the storage element 501 to a direct current meeting a specification of the direct-current bus 203.

Preferably, the second bi-directional current converter herein is a DC/DC bi-directional current converter.

As can be seen from the embodiment, in one aspect, a distributed power supply, a public power grid and a motor load are connected to a frequency converter respectively, so that the motor load may operate normally with power received from the distributed power supply through the frequency converter, even if the public power grid is unavailable.

In another aspect, the power storage unit is connected to the direct-current bus of the frequency converter, and the power storage unit may supply power to the motor load through the frequency converter in a condition that both the public power grid and the distributed power supply are unavailable, thus adaptability of the system is further enhanced.

It should be noted that, those skilled in the art may understand that a part of or all of the processes in the method according to the embodiments may be implemented through related hardware instructed via a computer program. The program may be stored in a computer readable storage medium. When being executed, the program may include the processes in the method embodiments. The storage medium may be a magnetic disk, an optical disk, read-only memory (ROM), random access memory (RAM), and so on.

The motor drive system with multi-energy power supply provided in the disclosure is described in detail. The principles and implementations of the disclosure are illustrated through embodiments. The description of the embodiments is only for helping to understand the method and core concept of the disclosure. Modifications may be made to the embodiments and application scope by those skilled in the art based on the concept of the disclosure. In conclusion, the content in this specification should not be understood as limitation to the invention.

## Claims

1. A motor drive system with multi-energy power supply, comprising a distributed power supply, a frequency converter, a public power grid and a motor load, wherein
the distributed power supply is connected to a direct-current bus of the frequency converter, and is configured to collect a direct current and transmit the direct current to the frequency converter;
the frequency converter comprises a first bi-directional current converter, an inverter and the direct-current bus, and the first bi-directional current converter is connected to the inverter through the direct-current bus;
wherein the first bi-directional current converter is connected to the public power grid, and is configured to convert an alternating current received from the public power grid to a direct current, output the direct current to the direct-current bus, convert a direct current transmitted from the direct-current bus to an alternating current and output the alternating current to the public power grid; and
the inverter is connected to the motor load, and is configured to convert the direct current transmitted from the direct-current bus to an alternating current and output the alternating current to the motor load;
the public power grid is configured to transmit an alternating current; and
the motor load is configured to operate based on a received alternating current transmitted from the inverter.

2. The system according to claim 1, further comprising a power storage unit,
wherein the power storage unit comprises a storage element and a connection switch, wherein the storage element is connected to the direct-current bus of the frequency converter through the connection switch, and is configured to store a direct current of the direct-current bus.

3. The system according to claim 2, wherein the power storage unit further comprises a second bi-directional current converter; and
the second bi-directional current converter is connected between the storage element and the connection switch, and is configured to convert a direct current received from the direct-current bus to a direct current meeting a specification of the storage element, and convert a direct current received from the storage element to a direct current meeting a specification of the direct-current bus.

4. The system according to claim 1, further comprising:
a grid-connection switch, wherein the public power grid is connected to the first bi-directional current converter through the grid-connection switch.

5. The system according to claim 1, wherein
the distributed power supply comprises any combination of one or more of solar photovoltaic, a fuel cell and wind power.

6. The system according to claim 5, wherein in a case that the distributed power supply comprises the solar photovoltaic, the system further comprises a first current converter; and
the distributed power supply is connected to the direct-current bus through the first current converter, and the first current converter is configured to convert a direct current outputted from the solar photovoltaic to a direct current meeting a specification of the direct-current bus.

7. The system according to claim 5, wherein in a case that the distributed power supply comprises the fuel cell, the system further comprises a second current converter; and
the distributed power supply is connected to the direct-current bus through the second current converter, and the second current converter is configured to convert a direct current outputted from the fuel cell to a direct current meeting a specification of the direct-current bus.

8. The system according to claim 5, wherein in a case that the distributed power supply comprises the wind power, the system further comprises a third current converter; and
the distributed power supply is connected to the direct-current bus through the third current converter, and the third current converter is configured to convert an alternating current outputted from the wind power to a direct current meeting a specification of the direct-current bus.

9. The system according to any one of claims 6-8, wherein the distributed power supply is connected to the direct-current bus through a connection switch.
